# EUROPÄISCHE PATENTSCHRIFT

(11) **EP 1 250 391 B1**
(45) Veröffentlichungstag und Bekanntmachung des Hinweises auf die Patenterteilung: **14.06.2006**
(21) Anmeldenummer: 00983348.4
(22) Anmeldetag: 19.12.2000
(51) Int. Cl.: C09J 5/06, B23P 19/00, B29C 65/10

(54) **VORRICHTUNG ZUM SETZEN UND ANKLEBEN VON HALTEELEMENTEN AUF TRÄGERFLÄCHEN**
DEVICE FOR PLACING AND STICKING HOLDING ELEMENTS TO SUPPORT SURFACES
DISPOSITIF PERMETTANT DE PLACER ET DE COLLER DES ELEMENTS DE MAINTIEN SUR DES SURFACES DE SUPPORT

(30) Priorität: 07.01.2000 DE 10000355
(43) Veröffentlichungstag der Anmeldung: 23.10.2002
(73) Patentinhaber: A. Raymond & Cie, 38028 Grenoble (FR)
(72) Erfinder: BREMONT, Michel, F-68220 Attenschwiller (FR); LEROUX, Yannick, F-31320 Castanet Tolosan (FR); SCHULLER, Olivier, F-68330 Huningue (FR)
(74) Vertreter: Rüttgers, Joachim
(86) Internationale Anmeldenummer: PCT/EP2000/012937
(87) Internationale Veröffentlichungsnummer: WO 2001/051579

(56) Entgegenhaltungen:
- WO-A-98/12016
- FR-A- 2 144 867
- US-A- 3 873 029
- US-A- 5 756 185

## Beschreibung

Die Erfindung bezieht sich auf eine Vorrichtung zum Setzen und Ankleben von Halteelementen auf Trägerflächen, wobei die Halteelemente mit Verbindungsflächen versehen sind, welche an ihrer freiliegenden Seite mit einem trockenen, durch Wärmeeinwirkung reaktivierbaren Schmelzklebstoff beschichtet sind. Die Vorrichtung besteht hierbei aus einem Gehäuse mit einem im Gehäuse verschieblich geführten Aufnahmeteil für das Halteelement sowie Mittel zum schnellen Aufheizen der Klebefläche, Absenken des Aufnahmeteils und Andrücken der Verbindungsfläche nach dem Aufschmelzen des Klebstoffs.

Aus WO 98/12 016 ist eine solche Vorrichtung zum automatisierten Setzen von Haltebolzen bekannt, welche von einem Roboter genau rechtwinklig auf die Trägerfläche abgesetzt wird. Die Haltebolzen werden hierbei durch einen Zuführungskanal bis zum Bolzenaufnahmeteil gefördert und dort mittels einer das Aufnahmeteil umgebenden Induktionsspule soweit aufgeheizt, daß der Schmelzklebstoff aufgeschmolzen wird, wonach der Haltebolzen auf die Trägerfläche angedrückt werden kann.

Diese Setzvorrichtung ist speziell für Haltebolzen mit runden Tellerbünden gebaut und wegen der induktiven Erwärmung nur für Metallbolzen anwendbar. Außerdem ist sie für den manuellen Betrieb ungeeignet, weil die Klebefläche absolut planparallel auf die Trägerfläche aufgesetzt werden muß, um den angestrebten Verklebungseffekt zu erreichen. Schon bei leichter Neigung der Verschiebeachse des Gehäuses zur Trägerfläche kann der Klebstoff auf der Verbindungsfläche des Halteelements nicht den erforderlichen Kontakt mit der Trägerfläche bekommen. Auch würde das Halteelement nicht genau im rechten Winkel auf der Trägerfläche aufsitzen, wodurch die saubere Befestigung eines Funktions- oder Bauteils auf dem Halteelement gefährdet wäre.

Aus **DE-A 2 233 412** ist eine vergleichbare Vorrichtung zum Ankleben von Halteelementen mit unterschiedlich ausgebildeten Klebeflächen auf Trägerflächen unter Verwendung von Heißluft sowie das zugehörige Verfahren bekannt welche aus den vorgenannten Gründen aber ebenfalls für den manuellen Betrieb ungeeignet ist.

Aufgabe der Erfindung ist es daher, die vorgenannte Setzvorrichtung so zu gestalten, daß diese generell für Halteelemente mit Klebeflächen verwendbar ist und im Bedarfsfall auch von Hand im rechten Winkel zur Trägerfläche aufgesetzt und bis zum Ankleben des Halteelements sicher festgehalten werden kann.

Diese Aufgabe wird bei der vorliegenden Setzvorrichtung dadurch gelöst, daß die über das Gehäuse zugeführte Heißluft vor der Auflage des Halteelements auf der Trägerfläche um das Aufnahmeteil herum an den auf der Klebefläche anhaftenden Schmelzklebstoff unmittelbar herangeführt wird, wobei das Aufnahmeteil von einer geschlossenen Wand umgeben ist, welche vom Heißluftaustritt im Gehäuse bis zum Halteelement heranreicht.

Durch das unmittelbare Heranführen der Heißluft an den Schmelzklebstoff wird ein schnelles Aufschmelzen ermöglicht. Wichtig ist hierbei, daß das Aufnahmeteil von einer bis zum Halteelement heranreichenden, geschlossenen Wand umgeben ist. Damit ist es nunmehr möglich, Halteelemente mit unterschiedlichen Ausbildungen der Klebefläche sowohl in Metall- als auch in Kunststoffausführung schnell und zuverlässig auf der Trägerfläche anzukleben.

Durch die Ausbildung der geschlossenen Wand nach Anspruch 2 wird erreicht, daß die zugeführte Heißluft gebündelt an die Klebefläche des Halteelements herangeführt und damit das Aufschmelzen des Klebstoffs in kürzester Zeit ermöglicht wird. Durch den Einbau eines kalottenförmigen Aufnahmekopfes zur Halterung des Aufnahmeteils gemäß Anspruch 3 wird ferner erreicht, daß Halteelemente mit unterschiedlichen Geometrie in das Aufnahmeteil einsetzbar sind und die Setzvorrichtung somit vielseitig verwendbar wird.

Mit der querverlaufenden Bohrung nach Anspruch 4 läßt sich vorteilhafterweise Kühlluft an das im Aufnahmeteil eingesetzte Ende des Halteelements heranführen, so daß das Aufheizen der Klebefläche örtlich begrenzt bleibt. Außerdem bietet die zugeführte Kühlluft die Möglichkeit, das in die Aussparung des Aufnahmeteils eingesetzte Ende des Halteelements nach dem Prinzip des Venturirohres anzusaugen und durch Abschalten der Kühlluftzufuhr wieder freizugeben.

Um die Setzvorrichtung auch von Hand betätigen zu können, ist es nach einem weiteren Merkmal der Erfindung zweckmäßig, den zylinderförmigen Körper über eine Trägerplatte mit drei achsparallel verlaufenden Stützstäben zu verbinden und diese gemäß Anspruch 5 auszubilden. Dadurch wird erreicht, daß das im Aufnahmeteil eingespannte Halteelement nach Auflage auf der Trägerfläche während des Aufheizens des Klebstoffs in einer planparallelen Berührung mit der Trägerfläche gehalten wird.

In der Zeichnung sind zwei Ausführungsbeispiele der Erfindung dargestellt, welche nachfolgend näher erläutert werden. Es zeigt
- Fig. 1: eine Setzvorrichtung in Montagehaltung an einer Trägerfläche in perspektivischer Darstellung,
- Fig. 2: den Kopf der Setzvorrichtung in vergrößertem Schnitt vor dem Einsetzen eines Halteelements,
- Fig. 3: den gleichen Setzkopf mit eingesetztem Halteelement beim Aufsetzen auf die Trägerfläche,
- Fig. 4: den gleichen Setzkopf nach dem Aufsetzen während des Andrückens des Halteelements,
- **Fig. 5**: ein Halteelement mit Gewindebolzen und kreisrundem Tellerbund als Klebefläche in Seitenansicht,
- Fig. 6: ein anderes Halteelement mit einer rechteckigen Klebefläche in Seitenansicht,
- Fig. 7: das gleiche Halteelement in Vorderansicht,
- Fig. 8: den gleichen Setzkopf wie in Fig.2 mit einer anderen Ausführungsform des Aufnahmeteils zur Aufnahme eines Halteelements nach Fig. 6 und 7, und zwar nach dem Aufsetzen und Andrücken des Halteelements
- Fig. 9: den Kopf einer anderen Setzvorrichtung mit eingesetztem Halteelement beim Aufheizen der Klebefläche und der Trägerplatte,
- Fig. 10: den gleichen Kopf beim Andrücken des Halteelements auf die Trägerplatte,
- Fig. 11: einen vergrößerten Ausschnitt des Kopfes von Fig. 9 und
- Fig. 12: einen vergrößerten Ausschnitt des Kopfes von Fig. 10.

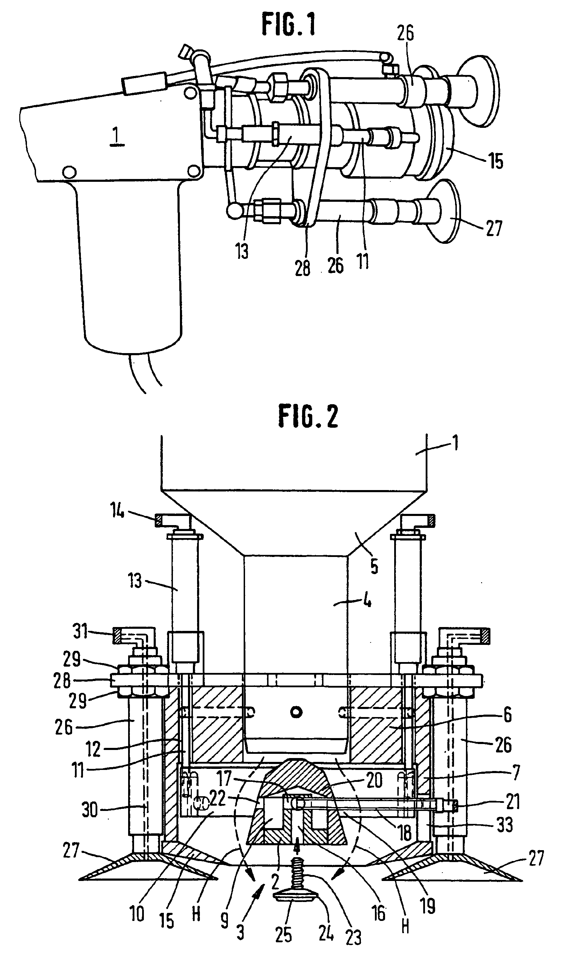

Die in **Fig.1** dargestellte Vorrichtung dient zum manuellen Setzen und Ankleben von Halteelementen auf Trägerflächen wie bsp. Metallbleche von Autokarosserien und Haushaltsgeräten, ferner Gehäusewände von elektrischen Geräten, Fensterscheiben oder sonstige Trägerplatten. Die Halteelemente sind hierbei mit im wesentlichen ebenen Klebeflächen versehen, welche an ihrer freiliegenden Seite mit einem trockenen, durch Wärmeeinwirkung reaktivierbaren Schmelzklebstoff beschichtet sind.

Die Setzvorrichtung besteht im wesentlichen aus einem handlichen Gehäuse **1** mit einem darin verschieblich geführten Aufnahmeteil **2** für das Halteelement **3,** ferner Antriebsmittel zum Absenken des Aufnahmeteils **2** und Andrücken des Halteelements **3** auf die Trägerfläche **32** sowie einem im Gehäuse 1 eingebauten Heißluftgebläse zum schnellen Aufwärmen des auf dem Halteelement **3** aufgebrachten Schmelzklebstoffs.

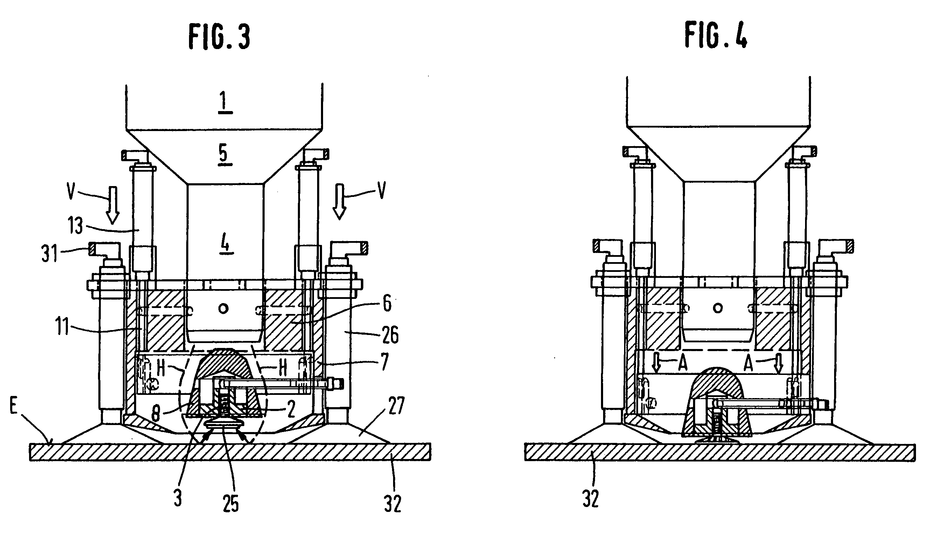

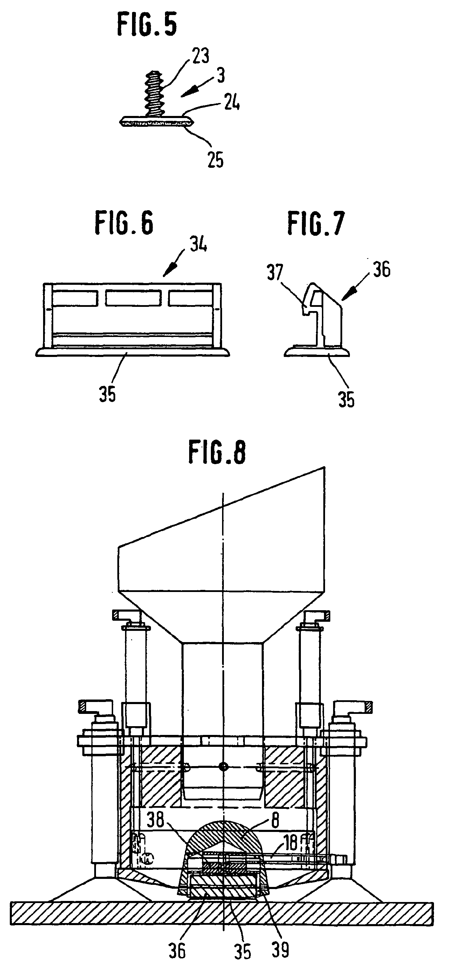

Die Ausgestaltung der Setzvorrichtung und deren Wirkungsweise soll nun anhand der **Figuren** 2 **bis 4** näher beschrieben werden. **Fig. 2** zeigt das untere Teil der Setzvorrichtung in vergrößerter Darstellung mit eingespanntem Halteelement **3** nach **Fig. 5. Fig.3** zeigt das Aufnahmeteil **2** vor dem Aufsetzen auf die Trägerfläche **32** und **Fig. 4** nach dem Aufsetzen während des Andrückens des Halteelements **3** auf die Trägerfläche **32.**

Wie aus **Fig. 2** weiter ersichtlich, ist das untere Ende des Gehäuses **1** über eine sich trichterförmig verjüngende Zwischenwand **5** mit einem im Durchmesser verkleinerten Rohrstück **4** verbunden. Dieses Rohrstück ist an seinem unteren Ende mit einem zylindrischen Körper **6** verbunden, der wiederum durch eine zylindrische Außenwand **7** nach unten verlängert ist. Innerhalb der zylindrischen Wand **7** befindet sich ein kalottenförmig ausgebildeter Aufnahmekopf **8** mit einer zentralen Aussparung **9,** welche zur Halterung des Aufnahmeteils **2** dient. Der Aufnahmekopf 8 ist durch Querverstrebungen **10** mit den Enden von Kolbenstangen **11** verbunden, die in Bohrungen **12** des zylindrischen Körpers **6** verschieblich geführt sind. Die Kolbenstangen **11** sind ihrerseits in Zylinder **13** geführt, welche über Lufteinlaßstutzen **14** mit Druckluft beaufschlagbar sind. Die zylinderförmige Wand **7** schließt unterhalb des Aufnahmekopfes 8 mit einem trichterförmig nach innen gerichteten Rand **15** ab, dessen Innendurchmesser etwas größer ist als der Außendurchmesser des Haltekopfes **8,** so daß dieser ungehindert durch das Loch im Innenrand **15** auf die Trägerfläche **32** abgesenkt werden kann.
Das Aufnahmeteil **2** besitzt eine zentrale, nach unten offenen Aussparung **16,** welche an ihrem oberen Ende mit einer querverlaufenden Bohrung **17** abschließt. Diese Bohrung **17** ist nach einer Seite hin an ein Belüftungsrohr **18** angeschlossen, das durch ein Loch **19** in der Kalottenwand **20** und durch eine vertikal verlaufende längliche Aussparung **33** in der zylindrischen Außenwand **6** hindurch nach außen geführt und mit einem Lufteinlaßstutzen **21** versehen ist, durch welchen Kühlluft von außen durchgeblasen wird.

Auf der gegenüberliegenden Seite des Belüftungsrohres **18** ist in der Kalottenwand **20** ein weiteres Loch **22** vorgesehen, durch welches die im Belüftungsrohr **18** zugeführte Kühlluft wieder austreten kann. Hierdurch wird nach dem sogenannten Venturirohr-Effekt in der Aussparung **16** gleichzeitig ein Luftsog erzeugt, durch welchen das eingesetzte Halteelement 3 angesaugt wird. Dieses kann beispielsweise der in **Fig.5** dargestellte Gewindebolzen sein.

Dieser Gewindebolzen besteht üblicherweise aus einem Gewindeschaft **23,** welcher über eine entsprechende Gewindeaufnahme mit einem Bauteil verbindbar ist, und aus einem daran angeformten Tellerbund **24.** Dieser weist auf seiner freiliegenden Unterseite eine im wesentlichen ebene Klebefläche **25** auf, welche mit einem trockenen, durch Wärmeeinwirkung reaktivierbaren Schmelzklebstoff beschichtet ist.

Das als Gewindebolzen ausgebildete Halteelement **3** wird, wie aus **Fig. 2** ersichtlich, mit seinem Gewindeschaft **23** in die Aussparung **16** des Aufnahmeteils **2** eingesetzt und zunächst durch Wandreibung gehalten, wobei der Schaftdurchmesser genau dem lichten Durchmesser der Aussparung **16** entspricht. Durch das Einblasen der Kühlluft durch das Belüftungsrohr **18** kann dann aufgrund des Venturirohr-Effektes noch eine Saugwirkung erzielt, welche den Schaft **23** zusätzlich festhält.

Um die Setzvorrichtung auch manuell betreiben zu können, ist der mit dem Gehäuserohrstück **4** verbundene zylindrische Körper **6** zweckmäßigerweise mit achsparallel verlaufenden Stützstäben **26** verbunden, welche an ihren freien Enden trichterförmig gestaltete Saugfüße **27** aufweisen. Zur stabilen, wackelfreien Auflage sind insgesamt drei über den Umfang verteilte Stützstäbe **26** vorgesehen, die an ihren oberen Enden in einer mit dem zylindrischen Körper **6** fest verbundenen Trägerplatte **28** mittels beidseitig angreifender Schrauben **29** fest verschraubt sind.
Die Stützstäbe **26** sind in ihrem Inneren von einer bis in die Saugfüße **27** hinabreichenden Bohrung **30** durchdrungen, welche an ihrem oberen Ende mit einem Anschlußstutzen **31** abschließt. An diese Stutzen **31** sind - in der Zeichnung nicht dargestellte - Saugleitungen anschließbar, um in den Saugfüßen **27** nach dem Aufsitzen auf der Trägerfläche **32** ein Vakuum zu erzeugen. Die Auflageebene "E" der Saugfüße **27** ist dabei genau rechtwinklig zur Verschieberichtung "V" des Aufnahmekopfes **8** ausgerichtet. Hierdurch wird beim Absenken und Andrücken des Aufnahmekopfes **8** in Richtung der Pfeile **"A"** sichergestellt, daß das eingespannte Halteelement **3** mit seiner Klebefläche **25** nach Auflage auf der Trägerfläche **32** (vgl. **Fig.4**) während des Anklebevorganges in einer planparallelen Berührung mit der Trägerfläche **32** gehalten wird, und zwar solange, bis eine ausreichende Haftverbindung erreicht worden ist. Ausreichend ist hierbei so zu verstehen, daß eine funktionelle Festigkeit erreicht ist, die einen problemlosen Transport des geklebten Teils ermöglicht.

Das Aufheizen der Klebefläche **25** erfolgt mittels Heißluft, die von einem nicht dargestellten Heißluftgebläse durch das verkleinerte Rohrstück **4** des Gehäuses **1** austritt. Das Aufheizen erfolgt in zwei Phasen. In der ersten, der sogenannten Vorwärmphase wird die Heißluft nach dem Einstecken des Halteelements **3,** wie in **Figur 2** angedeutet, um den Aufnahmekopf **8** herum entsprechend den gestrichelten Linien **"H"** an den auf der Klebefläche **25** anhaftenden Schmelzklebstoff herangeführt, und zwar noch vor dem Aufsetzen auf die Trägerfläche **32.** Diese Aufwärmphase kann einige Sekunden dauern.

Die zweite Phase des Aufheizens beginnt nach dem Positionieren und Aufsetzen der Setzvorrichtung an der vorgesehehen Stelle auf der Trägerfläche **32.** Wie aus **Figur 3** ersichtlich, trifft hier der Heißluftstrom **"H"** auf die Trägerfläche **32** und wärmt diese ebenfalls vor. Gleichzeitig wird der Heißluftstrom nach oben reflektiert und dabei von unten auf die Klebefläche **25** gerichtet. Hierdurch wird der Schmelzklebstoff sehr rasch auf die nötige Schmelztemperatur gebracht und das Halteelement **3** kann sodann, wie aus **Figur 4** ersichtlich, von den Kolbenstangen **11** über den Aufnahmekopf **8** abgesenkt und auf die Trägerfläche **32** gedrückt werden.

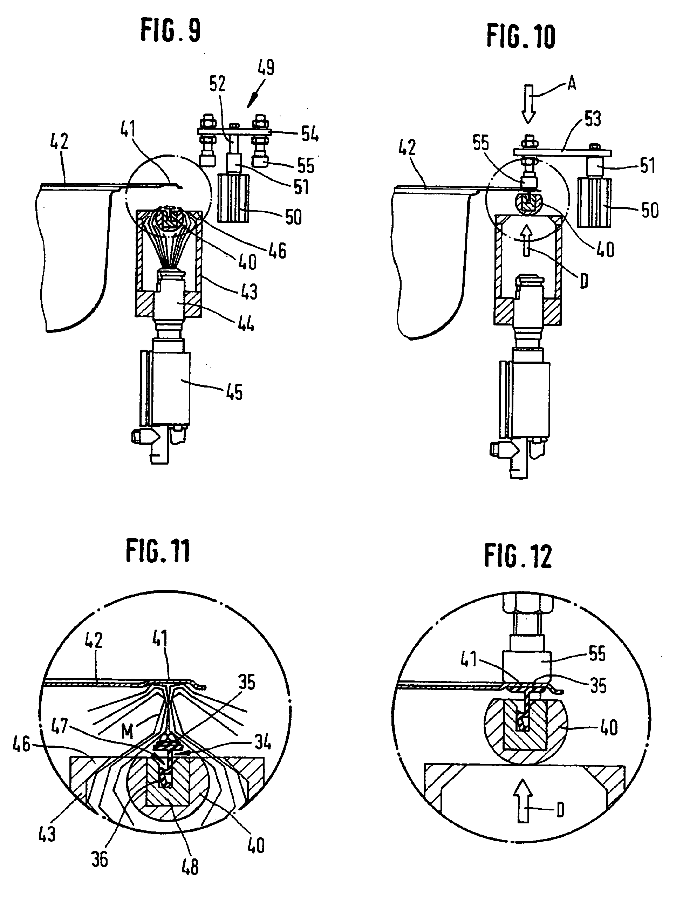

In den **Figuren 6 und 7** ist ein anderes Halteelement **34** mit einer rechteckigen Klebeplatte **35** dargestellt, welches beispielsweise am Rand der in den **Figuren 9 bis 12** teilweise angedeuteten Wanne **42** einer Küchenspüle an dessen Unterseite angeklebt werden soll. Senkrecht auf dieser Klebeplatte **35** ist ein langgestrecktes Befestigungsteil **36** angeformt, welches am oberen Rand eine abstehende Rastkante **37** aufweist, an welcher eine nicht dargestellte Halteklammer zur Befestigung der Spülwanne **42** in einer Arbeitsplatte aufgesteckt und verankert werden kann.

Dieses speziell geformte Halteelement **34** läßt sich, wie aus **Fig. 8** ersichtlich, mit der gleichen Setzvorrichtung von Hand setzen und ankleben wie das Halteelement nach **Fig. 5.** Hierzu muß jedoch in den Aufnahmekopf **8** ein anderes Aufnahmeteil **38** eingesetzt werden, das mit einer entsprechend länglichen Aussparung **39** versehen ist, deren Geometrie zur Aufnahme des Befestigungsteils **36** geeignet ist.

In den **Figuren 9 und 10** ist der Aufnahmekopf **40** einer anderen Setzvorrichtung gezeigt, welcher unterhalb des Randes **41** einer Spülwanne **42** vertikal verschieblich angeordnet und speziell zum automatisierten Setzen der Halteelemente **34** ausgebildet ist. Dieser Aufnahmekopf **40** ist wie bei der vorbeschriebenen Setzvorrichtung von einer geschlossenen Wand **43** umgeben, die am Kopf **44** eines Heißluftgebläses **45** befestigt ist und bis an den Aufnahmekopf **40** heranreicht.

Wie aus dem vergrößerten Ausschnitt der Setzvorrichtung nach **Fig. 11** erkennbar, ist der obere Rand **46** der den Aufnahmekopf **40** umgebenden Wand **43** trichterförmig bis an die Außenkontur des Aufnahmekopfes **40** zusammengeführt, wodurch der Heißluftstrom H gebündelt und direkt an die Klebeplatte **35** des im Aufnahmekopf **40** eingespannten Halteelements **34** und an die Unterseite des Randes **41** der Spülwanne **42** herangeführt wird. Das Halteteil **34** ist mit seinem Befestigungsteil **36** in der länglichen Aussparung **47** des Aufnahmeteils **48** eingespannt, welches seinerseits im Aufnahmekopf **40** fest eingebettet ist.

Seitlich oberhalb des Aufnahmekopfes **40** ist noch eine Andrückvorrichtung **49** ortsfest angeordnet, welche im wesentlichen aus einem Schwenkantrieb **50** und einem pneumatisch betätigbaren Druckluftzylinder **51** mit einem vertikal geführten Kolben **52** besteht. Am Kolbenende ist ein horizontal abstehender Hebel **53** (**Fig.10**) befestigt, der seinerseits am freien Ende mit einem querstehenden Balken **54** fest verbunden ist (**Fig. 9**). Dieser Balken **54** ist an seinen beiden Enden mit Druckstempel 55 verbunden, welche durch den Schwenkantrieb **50** aus der in **Fig. 9** gezeigten Warteposition über den Rand **41** der Spülwanne **42** eingeschwenkt und dann durch den Druckluftzylinder **51** in Pfeilrichtung **"A"** auf den Rand **41** der Spülwanne **42** in seine in **Fig. 10 und 12** gezeigte Anlageposition abgesenkt werden, während gleichzeitig der Aufnahmekopf **40** von unten in Pfeilrichtung **"D"** gegen den Rand **41** angedrückt wird.

Da die Spülwanne **42** normalerweise entlang ihres Randes **41** mit mehreren Halteelementen **34** bestückt werden muß, kann die Kombination von Aufnahmekopf **40** und Andrückvorrichtung **49** an den vorgesehenen Stellen des Spülwannenrandes **41** zum gleichzeitigen Setzen der Halteelemente **34** in einem geeigneten, nicht dargestellten Gestell plaziert werden. Hierbei ist es zweckmäßig, wenn das Heißluftgebläse **45** zentral unterhalb der Gebläseköpfe **44** angeordnet und über Schläuche an diese angeschlossen wird

Das automatisierte Setzen und Ankleben von Halteelementen **3** auf Trägerflächen **32** wird zweckmäßigerweise durch folgende Verfahrensschritte erreicht:
- Einlegen des Halteelements **3** durch Einführen des von der Klebefläche **25** abstehenden Halteteils **23** in die entsprechend geformte Aussparung **16** des Aufnahmeteils **2,**
- Positionieren des Aufnahmekopfes **8** an der vorgesehenen Klebestelle auf der Trägerfläche **32** und Heranführen des Aufnahmekopfes **8,**
- Anwärmen der Trägerfläche **32** unter gleichzeitiger Rückführung der Heißluft an die Klebefläche **25,**
- Andrücken des Halteelements **3** und Halten auf der Trägerfläche **32** bis zum Erreichen einer ausreichenden Haftverbindung und
- Entfernen der Setzvorrichtung von der Trägerfläche.

Beim manuellen Setzen und Ankleben von Halteelementen unter Verwendung einer Setzvorrichtung mit drei Stützstäben **26** kann das Arbeitsverfahren noch durch folgende Verfahrensschritte ergänzt werden:
- Erzeugen eines Unterdrucks in des Saugfüßen **27** während des Absenkens des Aufnahmekopfes **8** und
- Belüften der Saugfüße **27** vor dem Abheben der Setzvorrichtung von der Trägerfläche **32.**

### Bezugszeichenliste

- 1: Gehäuse
- 2: Aufnahmeteil
- 3: Halteelement
- 4: Verkleinertes Rohrstück
- 5: Trichterförmige Zwischenwand
- 6: Zylindrischer Körper
- 7: Zylindrische Wand
- 8: Aufnahmekopf
- 9: Aussparung
- 10: Querverstrebung
- 11: Kolbenstangen
- 12: Bohrungen
- 13: Zylinder
- 14: Lufteinlaßstutzen
- 15: Innenrand
- 16: Aussparung
- 17: Bohrung
- 18: Belüftungsrohr
- 19: Loch
- 20: Kalottenwand
- 21: Lufteinlaßstutzen
- 22: Loch
- 23: Gewindeschaft
- 24: Tellerbund
- 25: Ebene Klebefläche
- 26: Stützstäbe
- 27: Saugfüße
- 28: Trägerplatte
- 29: Schrauben
- 30: Bohrung
- 31: Anschlußstutzen
- 32: Trägerfläche
- 33: Vertikale Aussparung
- 34: Halteelement
- 35: Klebeplatte
- 36: Befestigungsteil
- 37: Rastkante
- 38: Aufnahmeteil
- 39: Aussparung
- 40: Aufnahmekopf
- 41: Rand
- 42: Spülwanne
- 43: Umgebende Wand
- 44: Kopf
- 45: Heißluftgebläse
- 46: Obere Rand
- 47: Aussparung
- 48: Aufnahmeteil
- 49: Andrückvorrichtung
- 50: Schwenkantrieb
- 51: Druckluftzylinder
- 52: Kolben
- 53: Hebel
- 54: Balken
- 55: Druckstempel

## Patentansprüche

1. Vorrichtung zum Setzen und Ankleben von Halteelementen auf Trägerflächen, wobei die Halteelemente mit Verbindungsflächen versehen sind, welche an ihrer freiliegenden Seite mit einem trockenen, durch Wärmeeinwirkung reaktivierbaren Schmelzklebstoff beschichtet sind, bestehend aus einem Gehäuse (1) mit einem darin verschieblich geführten Aufnahmeteil (2) für das Halteelement (3) sowie Mittel zum schnellen Aufheizen des Schmelzklebstoffes, Absenken des Aufnahmeteils (2) und Andrücken der Klebefläche (25) nach dem Aufschmelzen des Klebstoffs, wobei das Aufheizen mittels über das Gehäuse (1) zugeführter Heißluft erfolgt, **dadurch gekennzeichnet, daß** die Heißluft vor der Auflage des Halteelements (3) auf der Trägerfläche (32) um das Aufnahmeteil (2) herum an den auf der Klebefläche (25) anhaftenden Schmelzklebstoff unmittelbar herangeführt wird, wobei das Aufnahmeteil (2) von einer geschlossenen Wand (7) umgeben ist, welche vom Heißluftaustritt im Gehäuse (1) bis zum Halteelement (3) heranreicht.

2. Setzvorrichtung nach Anspruch 1, **dadurch gekennzeichnet, daß** die geschlossene Wand (7) an ihrem unteren Rand (15) trichterförmig bis an die Außenkontur des Aufnahmeteils (2) zusammengeführt ist.

3. Setzvorrichtung nach Anspruch 1 oder 2, **dadurch gekennzeichnet, daß** das Aufnahmeteil (2) von einem Aufnahmekopf (8) auswechselbar gehalten wird.

4. Setzvorrichtung nach einem der Ansprüche 1 bis 3, **dadurch gekennzeichnet, daß** das Aufnahmeteil (2) im Innern eine Aussparung (16) aufweist, welche an ihrem oberen Ende mit einer querverlaufenden Bohrung (17) abschließt.

5. Setzvorrichtung nach Anspruch 4, **dadurch gekennzeichnet, daß** der zylinderförmige Körper (6) über eine Trägerplatte (28) mit drei achsparallel verlaufenden Stützstäben (26) verbunden ist, welche an ihren unteren Enden Saugfüße (27) aufweisen, deren Auflageebene rechtwinklig zur Verschieberichtung "V" des Aufnahmekopfes (8) ausgerichtet ist.

6. Arbeitsverfahren zum automatisierten Setzen und Ankleben von Halteelementen (3) auf Trägerflächen (32) unter Verwendung eines Setzgerätes nach einem der Ansprüche 1 bis 4, **gekennzeichnet durch** folgende Arbeitsschritte
• Einlegen eines Halteelements (3) **durch** Einführen des von der Klebefläche (25) abstehenden Halteteils (23) in die entsprechend geformte Aussparung (16) des Aufnahmeteils (2)
• Positionieren des Aufnahmekopfes (8) an der vorgesehenen Klebestelle auf der Trägerfläche (32) und Heranführen des Aufnahmekopfes (8),
• Anwärmen der Trägerfläche (32) unter gleichzeitiger Rückführung der Heißluft an die Klebefläche (25),
• Andrücken des Halteelements (3) und Halten auf der Trägerfläche (32) bis zum Erreichen einer ausreichenden Haftverbindung und
• Entfernen der Setzvorrichtung von der Trägerfläche (32).

7. Arbeitsverfahren zum manuellen Setzen und Ankleben von Halteelementen auf Trägerflächen unter Verwendung eines Setzgerätes nach Anspruch 5 und Anwendung der Verfahrensschritte nach Anspruch 6, weiter **gekennzeichnet**
• **durch** Erzeugen eines Unterdrucks in den Saugfüßen (27) während des Absenkens des Aufnahmekopfes (8) und
• Belüften der Saugfüße (27) vor dem Abheben der Setzvorrichtung von der Trägerfläche (32)

8. Arbeitsverfahren zum manuellen Setzen und Ankleben von Halteelementen auf Trägerflächen unter Anwendung der Verfahrensschritte nach Anspruch 7, weiter **gekennzeichnet durch**
• Erzeugen eines Ansaugdrucks **durch** Einleiten von Kühlluft in das querverlaufende Belüftungsrohr (18).

## Claims

1. Device for placing retaining elements on and adhesively bonding said retaining elements to support surfaces, the retaining elements being provided with joining surfaces which are coated on the exposed side with a dry hotmelt adhesive which can be reactivated by the action of heat, consisting of a housing (1) having a receptacle part (2) displaceably guided therein and intended for the retaining element (3), and means for rapid heating of the hotmelt adhesive, lowering of the receptacle part (2) and pressing on of the adhesive surface (25) after the melting of the adhesive, the heating being effected by means of hot air supplied via the housing (1), **characterized in that** the hot air being fed directly to the hotmelt adhesive adhering to the adhesive surface (25), around the receptacle part (2), before the retaining element (3) is placed on the support surface (32), the receptacle part (2) being surrounded by a closed wall (7) which extends from the hot air outlet in the housing (1) to the retaining element (3).

2. Positioning device according to Claim 1, **characterized in that** the closed wall (7) is brought together at its lower edge (15) in a funnel-like manner up to the outer contour of the receptacle part (2).

3. Positioning device according to Claim 1 or 2,
**characterized in that** the receptacle part (2) is exchangeably held by a receiving head (8).

4. Positioning device according to any of Claims 1 to 3, **characterized in that** the receptacle part (2) has, in its interior, a recess (15) which is terminated at its upper end by a transverse bore (17).

5. Positioning device according to Claim 4, **characterized in that** the cylindrical body (6) is connected via a support plate (28) to three support rods (26) which are parallel to the axis and have, at their lower ends, suction feet (27) whose support plane is orientated at right angles to the displacement direction "V" of the receiving head (8).

6. Procedure for automatic positioning and adhesive bonding of retaining elements (3) on support surfaces (32) using a positioning device according to any of Claims 1 to 4, **characterized by** the following operations
• insertion of a retaining element (3) by introduction of the retaining part (23) projecting from the adhesive surface (25) into the correspondingly shaped recess (16) of the receptacle part (2).
• positioning of the receiving head (8) at the intended adhesion point on the support surface (32) and introduction of the receiving head (8).
• warming up of the support surface (32) with simultaneous recycling of the hot air to the adhesive surface (25).
• pressing on of the retaining element (3) and holding on the support surface (32) until an adequate adhesive bond has been achieved and
• removal of the positioning device from the support surface (32).

7. Procedure for manual positioning and adhesive bonding of retaining elements on support surfaces using a positioning device according to Claim 5 and application of the method steps according to Claim 6, further **characterized by**
• generation of reduced pressure in the suction feet (27) during the lowering of the receiving head (8) and
• venting of the suction feet (27) before the positioning device is lifted off the support surface (32).

8. Procedure for manual positioning and adhesive bonding of retaining elements on support surfaces using the method steps according to Claim 7, further **characterized by**
• generation of an intake pressure by passing cool air into the transverse venting pipe (18).

## Revendications

1. Dispositif de pose et de collage d'organes de retenue sur des surfaces faisant office de supports, les organes de retenue comportant en l'occurrence des faces de raccordement qui, au niveau de leur côté libre, sont enduites d'une substance adhésive fusible sèche susceptible d'être réactivée par un apport de chaleur, se composant d'un boîtier (1) comprenant un élément récepteur (2) pour l'organe de retenue (3), logé dans celui-ci avec la possibilité de se déplacer, ainsi que de moyens pour chauffer rapidement la substance adhésive fusible, faire descendre l'élément récepteur (2) et appliquer une force de compression sur la portée de collage (25) après la fusion de la substance adhésive, le chauffage s'effectuant en l'occurrence au moyen d'air chaud amené par l'intermédiaire du boîtier, **caractérisé en ce que** l'air chaud est, avant le placement de l'organe de retenue (3) sur la surface formant support (32), directement appliqué, tout autour de l'élément récepteur (2), sur la substance adhésive fusible dont est enduite la portée de collage (25), l'élément récepteur (2) étant en l'occurrence entouré par une paroi définissant une enceinte fermée (7) qui, partant de la sortie d'air chaud dans le boîtier (1) s'étend jusqu'à l'organe de retenue (3).

2. Dispositif de pose selon la revendication 1, **caractérisé en ce que** la paroi définissant une enceinte fermée (7) va, au niveau de son bord inférieur (15), en s'amenuisant selon une configuration en entonnoir jusqu'au niveau du contour extérieur de la tête de réception (2).

3. Dispositif de pose selon la revendication 1 ou 2, **caractérisé en ce que** l'élément récepteur (2) est maintenu de manière interchangeable par une tête de retenue (8).

4. Dispositif de pose selon l'une des revendications 1 à 3, **caractérisé en ce que** l'élément récepteur (2) est intérieurement muni d'un évidement (16), qui se termine, au niveau de son extrémité supérieure, par un alésage à disposition oblique (17).

5. Dispositif de pose selon la revendication 4, **caractérisé en ce que** le corps cylindrique (6) est raccordé, par l'intermédiaire d'une plaque de support (28), à trois tiges d'appui (26) disposées parallèlement à l'axe de celle-ci, qui sont munies au niveau de leurs extrémités inférieures de ventouses d'appui (27) dont le plan d'application est orienté perpendiculairement au sens du déplacement "V" de la tête de réception (8).

6. Mode opératoire pour la pose et le collage en mode automatique d'organes de retenue (3) sur des surfaces formant support (32) par utilisation d'un appareil de pose selon l'une des revendications 1 à 4, **caractérisé en ce qu'**il comprend les étapes consistant à
• Insérer un l'organe de retenue (3) en introduisant l'élément de retenue (23) faisant saillie depuis la portée de collage (25) dans l'évidement de configuration correspondante (16) de l'élément récepteur (2),
• présenter la tête de réception (8) à l'endroit de collage prévu sur la surface formant support (32) et amener en position de la tête de réception (8),
• chauffer la surface formant support (32) tout en faisant agir en retour l'air chaud sur la portée de collage (25),
• appliquer une force de compression sur l'organe de retenue (3) et maintenir celui-ci sur la surface formant support (32) jusqu'à l'obtention d'une liaison d'adhérence suffisante et
• retirer dispositif de pose de la surface formant support (32).

7. Mode opératoire pour la pose et le collage en mode manuel d'organes de retenue sur des surfaces faisant office de supports en utilisant l'appareil de pose selon la revendication 5 et en effectuant les opérations énoncées dans la revendication 6, **caractérisé en outre par** les étapes consistant à
• créer une dépression à l'intérieur des ventouses d'appui (27) durant la descente en position de la tête de réception (8) et
• rompre le vide à l'intérieur des ventouses d'appui (27) avant le décoller le dispositif de pose de la surface formant support (32).

8. Mode opératoire pour la pose et le collage en mode manuel d'organes de retenue sur des surfaces faisant office de supports en réalisant les opérations dont il est fait état dans la revendication 7, **caractérisé en outre par** l'étape consistant à
• engendrer une pression d'aspiration par l'introduction d'air de refroidissement dans le tube de mise à l'atmosphère (18) à disposition oblique.
